Europäisches Patentamt

(19) European Patent Office

Office européen des brevets

(11) Publication number : **0 515 335 A2**

# (12) EUROPEAN PATENT APPLICATION

(21) Application number : **92850109.7**

(22) Date of filing : **14.05.92**

(51) Int. Cl.⁵ : **H04B 7/26,** H04B 7/005, H04Q 7/04

(30) Priority : **17.05.91 US 702019**

(43) Date of publication of application :
**25.11.92 Bulletin 92/48**

(84) Designated Contracting States :
**AT CH DE FR GB IT LI NL SE**

(71) Applicant : **TELEFONAKTIEBOLAGET L M ERICSSON**
**Patent and Trademark Department**
**S-126 25 Stockholm (SE)**

(72) Inventor : **Ghisler, Walter**
**Batsmansvägen 21**
**S-194 41 Upplands Väsby (SE)**
Inventor : **Kallin, Harald**
**Kruzhornsvägen 40**
**S-191 53 Sollentuna (SE)**
Inventor : **Dahlin, Jan Erik Ake Steinar**
**Saningsvägen 152**
**S-175 45 Järfälla (SE)**
Inventor : **Anderson, Claes**
**Värtavägen 27**
**S-115 29 Stockholm (SE)**

(74) Representative : **Lövgren, Tage et al**
**Telefonaktiebolaget L M Ericsson Patent and**
**Trademark Department**
**S-126 25 Stockholm (SE)**

(54) **Initial power control of mobile station transmission in a mobile radiotelephone system.**

㊼  A mobile station is instructed to first transmit at relatively high sending power on a channel being assigned despite possible interference and is then instructed before a first time interval has elapsed to transmit at a more optimal power level to reduce interference. The power level on the channel is then periodically monitored at a second time interval greater than the first time interval. Momentarily increased interference is therefore tolerated in exchange for increased assurance of channel assignment. The interference is quickly reduced by implementing a fast power regulating function as compared to a slower ongoing channel power monitoring function.

EP 0 515 335 A2

## FIELD OF THE INVENTION

The present invention relates to power control of mobile station transmissions in a mobile radiotelephone system and more particularly to power control at the time of initial transmission on a voice channel by the mobile station.

## BACKGROUND OF THE INVENTION

In order to minimize interference between the various transmitters in a mobile radiotelephone system, the transmission power of the transmitters, in particular the mobile stations, is closely regulated to assure that no more power is radiated than is necessary to maintain satisfactory transmission of a call between a mobile station and a base station. Such regulation is achieved in the prior art, for example, by measuring the received signal strength of transmissions from a mobile station at the corresponding base station, comparing the signal strength with an upper and a lower threshold indicative of a desired signal strength level range for proper reception, and issuing a power adjustment order from the base station to the mobile station depending on the comparison result. This monitoring and regulation process is carried out at relatively infrequent intervals, typically on the order of about 5 seconds.

Although the foregoing infrequent regulating function is generally adequate to supervise an ongoing call on an established voice channel, problems arise in relation to power control at the time of initial establishment of a voice connection. Voice connections are established not only at the time of call access to or from a mobile station, but also during hand-off of the mobile station from one voice channel to another. During establishment of a voice connection, a way must be devised to determine an initial power level for transmissions on the voice channel by the mobile station. From prior art U.S. Patent No. 4,696,027, it is known to estimate in conjunction with a hand-off an optimum power level for the mobile station on the new voice channel and to transmit that estimated optimum power level to the mobile station at the time of voice channel designation. According to such an approach, if the instructed power level is not in fact sufficient, the new voice connection may not in fact be established and a call access attempt must be retried. In hand-off situations, the more serious result may be that the call being handed-off is dropped.

To avoid such consequences, and to further facilitate successful call access and hand-off, it is desirable that initial transmission by a mobile station on a voice channel be at a relatively high power level that is later regulated down to an optimum power level in terms of interference. The aforementioned infrequent power regulating function is unsuitable for such a purpose because interference caused by transmission at a high power level may persist for a significant period of time before power regulation is effected.

## SUMMARY OF THE INVENTION

According to the present invention, a mobile station is instructed to first transmit at a relatively high sending power on a traffic channel being assigned to the mobile station as a result of an initial access or hand-off by or on behalf of the mobile station despite possible interference with other calls in the mobile radiotelephone system generated by the relatively high sending power of the mobile station. The mobile station is then instructed before a first time interval has elapsed to transmit at a more optimal power level to reduce interference. The power level on the traffic channel is periodically monitored at a second time interval greater than the first time interval. Momentarily increased interference is therefore tolerated in exchange for more reliable channel assignment. The interference is quickly reduced by implementing a fast power regulating function as compared to a slower ongoing channel power monitoring function.

## BRIEF DESCRIPTION OF THE DRAWINGS

These and other features and advantages of the invention will be readily apparent to one of ordinary skill in the art from the following written description, read in conjunction with the drawings, in which:

Fig. 1 is a representation of hand-off of a mobile station from a first cell to a second cell;

Fig. 2 is a timing diagram comparing initial power control according to the present invention with initial power control according to the prior art;

Fig. 3 is a hardware block diagram of part of a mobile radiotelephone system that may be used according to the present invention;

Figs. 4a-4d are representations of word formats to control transmission power level in a mobile station that may be used in connection with the present invention;

Fig. 5 is a flowchart illustrating operation of the initial power control function of the present invention; and

Figs. 6a and 6b are flowcharts illustrating operation of "old" and "new" base stations in performing hand-off according to the present invention.

## DETAILED DESCRIPTION OF THE PREFERRED EMBODIMENT

The initial power control function of the present invention is applicable to both new call accesses and call hand-offs. The following description, however, will focus more particularly on the case of call hand-off for purposes of simplifying the description only. The application of the present invention to call accesses will be readily apparent therefrom.

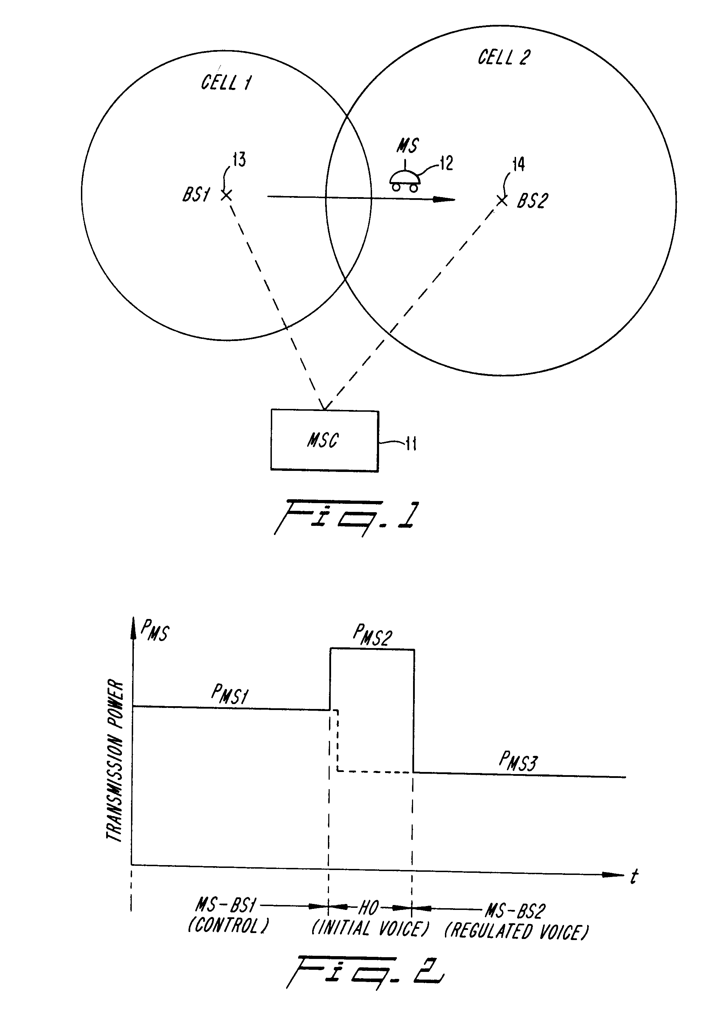

Referring to Fig. 1, a mobile switching center (MSC) 11 coordinates hand-off of a mobile station (MS) 12 having a call in progress from a first base station (BS1) 13 in a first cell to a second base station (BS2) 14 in a second cell as the mobile station 12 passes beyond the boundary of the first cell into the second cell. Such hand-off is accomplished according to procedures well-known in the art.

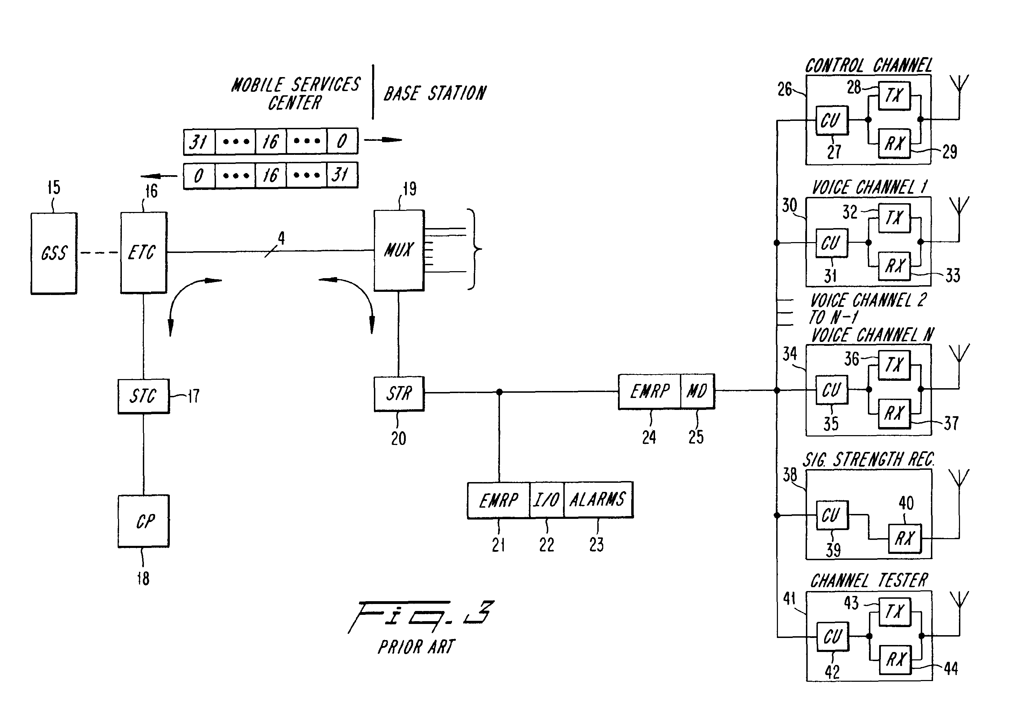

The transmission power of the mobile station 12 before, during, and after hand-off varies in accordance with the present invention in a manner illustrated in Fig. 2. Referring to that figure, the transmission power $P_{MS}$ of a mobile station is plotted on a vertical axis versus time on the horizontal axis. Hand-off is executed during the time interval indicated as HO along the horizontal time axis. Before hand-off, a communications channel is established between the mobile station 12 and the first base station 13. After hand-off, communications are carried out on another channel between the mobile station 12 and the second base station 14.

Before hand-off, when the mobile station 12 is operating in the outer or fringe region of cell 1, the optimal transmission power $P_{MS1}$ for the mobile station 12 will typically be the maximum power allowed by mobile stations in cell 1, because the mobile station 12 is at or near the border of cell 1. During hand-off, the mobile station 12 is instructed to transmit at a power level $P_{MS2}$ equal to the maximum power allowed in cell 2 in order to increase the likelihood of a successful hand-off. After hand-off has been completed, the mobile station 12 is instructed to transmit at a more optimal power level $P_{MS3}$ so as to minimize interference caused in cell 2. In general, the optimum power level for the mobile station will be the minimum power level that assures satisfactory reception, since any greater power output not only causes interference with other calls but may deplete the mobile station's power store. The completion of hand-off may be judged, for instance, by the mobile switching center 11 receiving a hand-off confirmation message from a second base station 14 in cell 2. Such a confirmation is given when the second base station 14 detects transmission of the new channel's supervisory audio tone (SAT) in the case of an analog channel or digital verification color code (DVCC) in the case of a digital channel.

Thus, the present invention may be used in analog only, dual-mode, and purely digital cellular radio telephone systems.

In the prior art, by contrast, an optimum power level for the mobile station after hand-off is estimated and sent to the mobile station during the beginning stages of hand-off as indicated by the dashed line in Fig. 2. Transmission at such a lowered power level reduces the likelihood of achieving a successful hand-off. In particular, for a hand-off to be "approved", transmissions from the mobile station must be received with a certain minimum clarity. If a low transmission power level is used by the mobile station during hand-off, chances are greater that reception of transmissions by the base station will not be satisfactory.

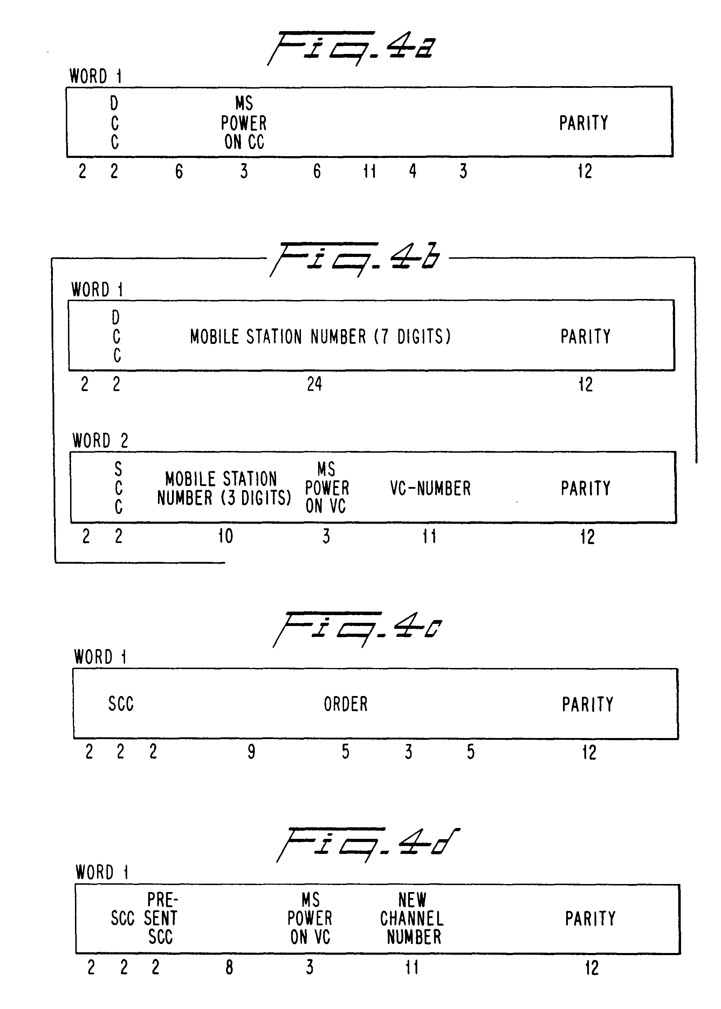

Fuller appreciation of the present invention may be had with reference to Fig. 3, showing a simplified block diagram of a portion of a mobile radiotelephone system which may be used to implement the present invention. Control communications between the mobile switching center and a base station of a known mobile radiotelephone system are carried out across a predetermined channel (in this instance, channel 16) of a larger number of channels (in this instance, 32) defined by respective time slots on a pulse code modulated link in time-division multiplex fashion according to the CCITT standard. Plural time slots make up a communications frame which is exchanged between the mobile switching center and the base station on a four-wire line 4. Time slot communications functions are handled by an exchange terminal circuit (ETC) 16 on the mobile switching center side and by a multiplexer (MUX) 19 on the base station side. Data communications are formatted according to the CCITT nr.7 signalling system by a signalling terminal central (STC) 17 on the mobile switching center side and a signalling terminal regional (STR) 20 on the base station side. Overall control of the mobile switching center and the base station is performed by a central processor (CP) 18 of the mobile switching center. Voice communications, however, are not directly handled by the central processor (CP) 18 but pass uninterrupted through the multiplexer (MUX) 19 and the exchange terminal circuit (ETC) 16 to a group switching subsystem (GSS) 15 for appropriate call routing.

The base station consists principally of a number of autonomous channel units 26, 30, 34, 38, 41 typically including a radio transmitter (TX) and a radio receiver (RX) controlled by a control unit (CU). In addition to a number of voice channels, N, there is provided a control channel unit 26, a channel tester 41 and a signal strength receiver 38, which has a control unit 39 and a radio receiver 40 but no transmitter. The control channel 26 is used to, among other things, set up calls across the various voice channels. The channel tester 41 allows trouble-shooting and diagnostics to be performed under control of the mobile switching center.

The switching of messages between the various control units is performed by a regional processor EMRP ("extension module regional processor") 24 in cooperation with a message distributor (MD) 25. The EMRP 24 calculates control unit addresses and scans the control units 27, 31, 35, 39 and 42 to see if a message is waiting. The message distributor 25 puts messages into HDLC (high-level data link communications) format and converts messages from parallel on the channel unit side to serial. An additional EMRP 21 is used to provide a human interface including a simple I/O terminal 22 and various external alarms 23.

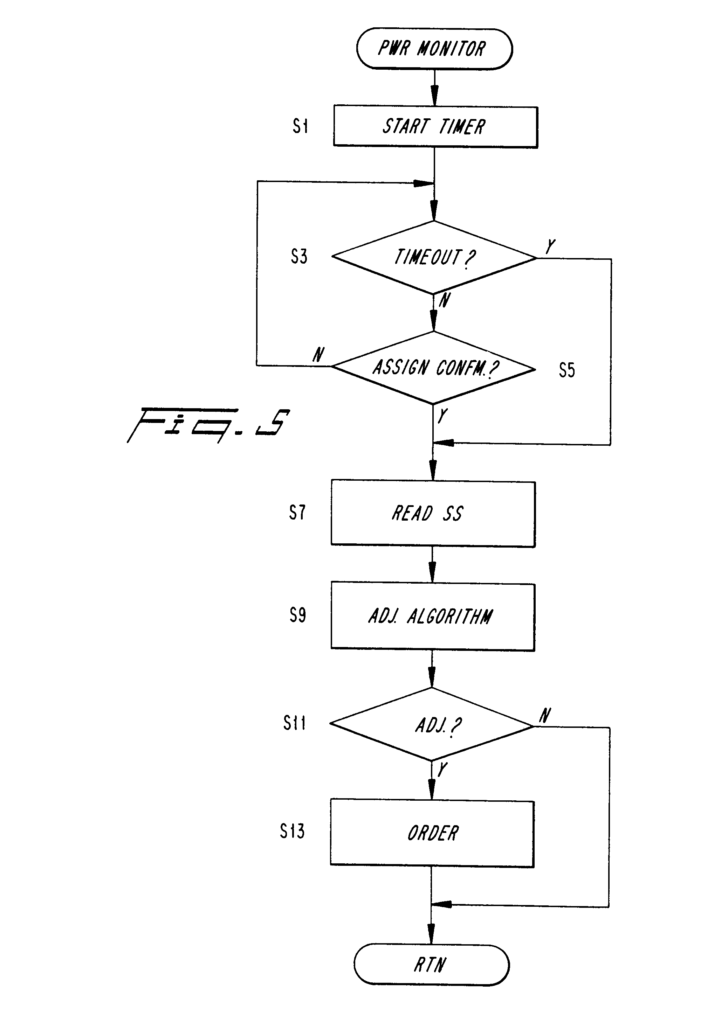

Referring to Fig. 4, the transmission power of the mobile station (analog) is regulated using control messages sent from the base station BS to the mobile station MS. The messages may be sent on either the base station's control channel in the case of a call access or a voice channel in the case of hand-off. The control channel in the direction from the base station to the mobile station is designated as the forward control channel (FOCC), and the voice channel in the same direction is designated as the forward voice channel (FVC). Except when another more particular message is to be sent, a message as represented in Fig. 4a is sent at regular intervals on the FOCC indicating the initial mobile station power level (MS power on CC) to be used for system access. At the beginning of the message, a field DCC (digital color code) identifies the group of cells (cluster) to which the cell transmitting the message belongs. If a call access attempt is successful, a voice channel designation message, illustrated in Fig. 4b, is then addressed to the mobile station by the mobile station number (seven digits augmented when necessary by three additional digits) and sent on the FOCC giving the channel number (VC-Number) and the mobile station output power (MS power on VC) to be used initially on the voice channel. The DCC appears at the beginning of the first word, and at the beginning of the second word, a field SCC (supervisory audio tone color code) indicates which supervisory audio tone is transmitted on the assigned voice channel. A parity field is allocated at the conclusion of each word for error detection. Since the use of DCC, SCC and parity is well-known in the art, no further mention of the same will be made here.

When a call is in progress, an order (illustrated in Fig. 4c) may be sent to the mobile station across the FVC to, among other things, change the mobile station's output power as the path loss from the mobile station to the base station varies. During hand-off, a voice channel designation message (illustrated in Fig. 4d) similar to that of Fig. 4b instructs the mobile station to switch over from the current voice channel to a new voice channel designated by a new channel number. A field in the message (MS power on VC) directs the mobile station to transmit with a specified output power on the new voice channel.

In accordance with the present invention, the power level in both of the voice channel designation messages, initial voice channel designation (Fig. 4b) and voice channel designation during hand-off (Fig. 4d), are set to the highest allowable power level in the cell to which the voice channel belongs in order to maximize the likelihood of successful call accesses and hand-offs. Once a successful voice connection has been confirmed, an order such as that of Fig. 4c is sent to regulate the output power of the mobile station down to an optimal level so as to minimize interference with other calls in progress in the mobile radiotelephone system.

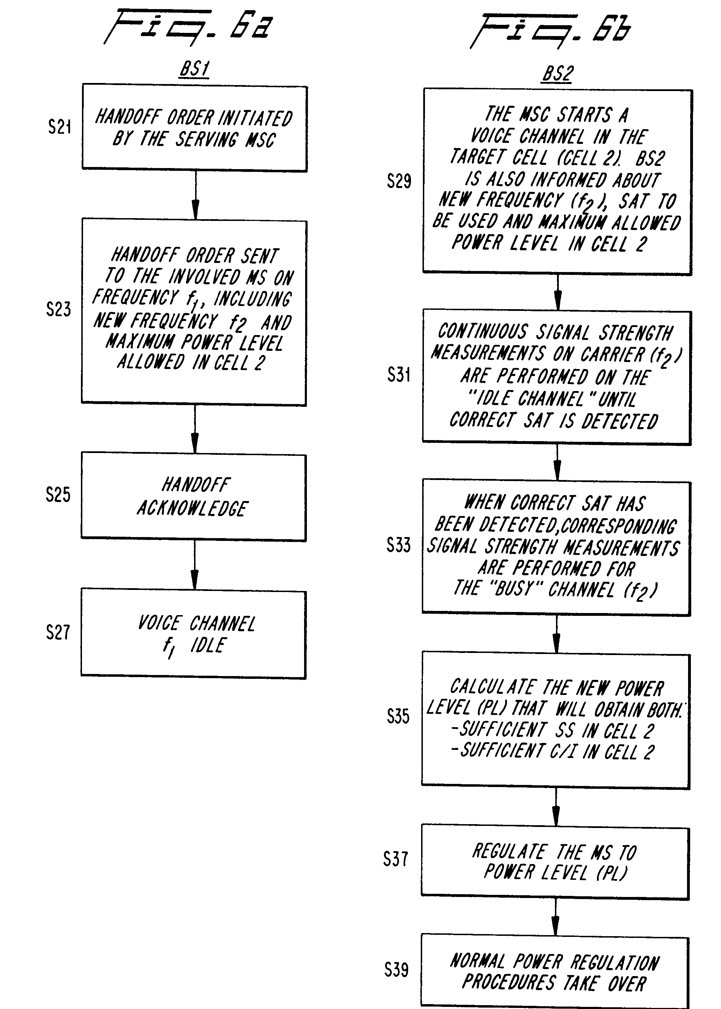

The flowchart of Fig. 5 illustrates the power regulation function executed in the base station (or other controlling point, e.g., the mobile switching center MSC) for each voice channel according to the present invention. Referring to that figure, a timer is initially set in step S1 to govern the interval at which the power level of transmissions by the mobile station will be monitored. In succeeding steps S3 and S5, it is checked whether the timed interval has expired or whether seizure of the voice channel has been newly-confirmed, as for instance in the case of initial voice channel assignment or hand-off. If either of these conditions is true, regulation of the mobile stations transmission power is effected in steps S7-S13. If neither condition is true, both of the conditions continue to be checked in steps S3 and S5 until one of them becomes true. To implement the foregoing function in order to provide initial as well as periodic power regulation, a timer may be provided individually for each call and be reset at call set-up and at handoff such that the first regulation occurs immediately.

In order to regulate the transmission power of the mobile station, the base station (or mobile switching center) reads the signal strength of transmissions by the mobile station as measured by the base station in step S7. The signal strengths may also be read from base stations adjoining the base station with which the mobile station is presently communicating. In step S9, a suitable thresholding and comparison algorithm is applied to the signal strength or strengths input during the previous step S7. The exact nature of such an algorithm is not important to the practice of the present invention, and a number of such algorithms are known in the art. In a preferred embodiment, the thresholding and comparison algorithm of step S9 may be the same as that outlined in Swedish Patent Application No. 9003196-4 filed October 5, 1990. Also, the signal strengths read in step S7 may, in the case of call hand-off, include measurements taken before hand-off and copied to a new channel handler in the mobile switching center as disclosed in Swedish Patent Application No. 9002377-1 filed July 6, 1990. From the application of the algorithm in S9, it is then determined in step S11 whether or not a power adjustment is necessary. If such an adjustment is necessary, a suitable order is then issued in step S13 by sending a message such as that of Fig. 4c. If no power adjustment is necessary, the power monitoring routine then returns and repeats.

By proceeding immediately to execute a power adjustment routine upon the occurrence of either a power monitoring timeout or a channel seizure confirmation, mobile stations may be instructed to transmit at maximum allowed power during initial access without fear of prolonged interference during a monitoring period that may have, for example, just begun. High initial transmission power maximizes the likelihood of successful connection, and confirmation (i.e., "loop-back" of the correct SAT by the mobile station, confirming its transmission on the designated channel) immediately acts to cause a mobile station's power to be regulated downward to an optimal level.

Referring now to Fig. 6, the operation in performing hand-off according to the present invention of a first base station BS1 initially handling a call and a second base station BS2 to which the call is to be handed off will now be described. Although the present description assumes an analog cellular system, the invention is equally applicable to hand-off in digital cellular systems.

Referring first to Fig. 6a, when a decision to perform a hand-off has been made, the MSC currently serving the mobile station sends a hand-off order to the mobile station via the base station BS1 currently serving the mobile station (S21). The hand-off order is transmitted from BS1 to the mobile station across the established traffic channel which, assuming the analog system is a frequency division multiple access (FDMA) system, may be designated as frequency f1. The hand-off order includes information on the new traffic channel to be used in the target base station BS2 (i.e., the frequency f2) and the maximum power level, depending on cell size, allowed in the new cell (S23). The mobile station acknowledges receipt of the hand-off order (S25) and quits transmission across channel f1 (S27).

Referring now to Fig. 6b, at the time of the hand-off order issued by the MSC, the MCS also sends an order to the target base station BS2 instructing it to take over responsibility for the mobile station handed-off from the initial base station BS1. The order includes information on the frequency f2 selected as the "new" traffic channel, the supervisory audio tone (SAT) to be used, and the power level to be used by the mobile station (S29) during hand-off. According to the present invention, this power level is the maximum power level allowed in the target cell if the mobile's power class makes it possible for the mobile station to provide this power; otherwise, it is the mobile station's maximum power. The base station BS2 then performs continuous signal strength measurements on the as-yet-idle channel f2 until the designated SAT is received on the channel from the mobile station (S31). The measurements performed by the base station BS2 are used later to regulate call quality on the new channel.

When the base station BS2 has received the correct SAT, it then performs corresponding signal strength measurements on the now-busy channel f2 (S33). A new power level for the mobile station is calculated that will assure both sufficient signal strength and sufficient carrier-to-interference margin in the new cell (S35), and transmission power by the mobile station is regulated down to the new power level (S37). Transmission at the maximum power level may last on the order of .5 seconds before the fast power regulation operation has been completed and the mobile station has responded by lowering its power level. Once hand-off and the fast power regulation operation have been completed, the normal relatively slow power regulation procedures take over immediately (S39) as previously explained in relation to Fig. 5 such that several seconds will typically elapse before transmission power of the mobile station is next regulated.

It will be appreciated by those of ordinary skill in the art that the present invention can be embodied in other specific forms without departing from the spirit or essential character thereof. The presently disclosed embodiments are therefore considered in all respects to be illustrative and not restrictive. The scope of the invention is indicated by the appended claims rather than the foregoing description, and all changes which come within the meaning and range of equivalents thereof are intended to be embraced therein.

## Claims

1. A method of regulating transmission power of a mobile station at the time of assignment of a channel, comprising the steps of:
   directing said mobile station to first transmit at a relatively high sending power on said channel despite possible interference;
   directing said mobile station before a first time interval has elapsed to then transmit at a more optimal power level to reduce interference; and
   periodically monitoring a power level on said channel at approximately a second time interval greater than said first time interval.

2. The method of claim 1 wherein said relatively high sending power is the maximum sending power allowed in a cell to which said channel is allocated.

3. The method of claim 1 wherein said first time interval is sufficient to receive a channel identifier transmitted by said mobile station.

4. The method of claim 3 wherein said second time interval is several seconds in duration.

5. An apparatus for regulating transmission power of a mobile station at the time of assignment of a channel, comprising:
   first means for directing said mobile station to first transmit at a relatively high sending power on said channel despite possible generation of interference;
   second means for directing said mobile station

**EP 0 515 335 A2**

before a first time interval has elapsed to transmit at a more optimal power level to reduce interference; and
means for periodically monitoring the power level on said channel at approximately a second time interval greater than said first time interval.

6. The apparatus of claim 5 wherein said relatively high sending power is the maximum sending power allowed in a cell to which said channel is allocated.

7. The apparatus of claim 5 wherein said first time interval is sufficient to receive a channel identifier transmitted by said mobile station.

8. The apparatus of claim 7 wherein said second time interval is several seconds in duration.

*Fig. 1*

*Fig. 2*

Fig. 3
PRIOR ART

## Fig.4a

WORD 1

| D C C | MS POWER ON CC | | | | | PARITY |
|---|---|---|---|---|---|---|
| 2  2 | 6 | 3 | 6 | 11 | 4  3 | 12 |

## Fig.4b

WORD 1

| D C C | MOBILE STATION NUMBER (7 DIGITS) | PARITY |
|---|---|---|
| 2  2 | 24 | 12 |

WORD 2

| S C C | MOBILE STATION NUMBER (3 DIGITS) | MS POWER ON VC | VC-NUMBER | PARITY |
|---|---|---|---|---|
| 2  2 | 10 | 3 | 11 | 12 |

## Fig.4c

WORD 1

| SCC | | ORDER | | | PARITY |
|---|---|---|---|---|---|
| 2  2  2 | 9 | 5 | 3 | 5 | 12 |

## Fig.4d

WORD 1

| SCC | PRE-SENT SCC | MS POWER ON VC | NEW CHANNEL NUMBER | PARITY |
|---|---|---|---|---|
| 2  2  2 | 8 | 3 | 11 | 12 |

```
                        ┌──────────────┐
                        │ PWR MONITOR  │
                        └──────┬───────┘
                               │
              S1        ┌───────▼───────┐
                        │  START TIMER  │
                        └───────┬───────┘
                               │
                    ┌───────────▼─────────┐
                    │       TIMEOUT ?      │──Y──┐
              S3    └───────────┬─────────┘      │
                               │ N               │
                    ┌───────────▼─────────┐      │
              N ────│    ASSIGN CONFM.?    │  S5  │
                    └───────────┬─────────┘      │
                               │ Y               │
                        ┌───────▼───────┐◄────────┘
              S7        │    READ SS    │
                        └───────┬───────┘
                               │
              S9        ┌───────▼───────┐
                        │ ADJ. ALGORITHM│
                        └───────┬───────┘
                               │
              S11     ┌─────────▼─────────┐
                      │      ADJ. ?       │──N──┐
                      └─────────┬─────────┘     │
                               │ Y              │
              S13      ┌───────▼───────┐        │
                       │    ORDER      │        │
                       └───────┬───────┘        │
                               │◄───────────────┘
                        ┌───────▼───────┐
                        │     RTN       │
                        └───────────────┘
```

FIG. 5

10

# Fig. 6a

## BS1

S21 | HANDOFF ORDER INITIATED BY THE SERVING MSC

S23 | HANDOFF ORDER SENT TO THE INVOLVED MS ON FREQUENCY $f_1$, INCLUDING NEW FREQUENCY $f_2$ AND MAXIMUM POWER LEVEL ALLOWED IN CELL 2

S25 | HANDOFF ACKNOWLEDGE

S27 | VOICE CHANNEL $f_1$ IDLE

# Fig. 6b

## BS2

S29 | THE MSC STARTS A VOICE CHANNEL IN THE TARGET CELL (CELL 2). BS2 IS ALSO INFORMED ABOUT NEW FREQUENCY ($f_2$), SAT TO BE USED AND MAXIMUM ALLOWED POWER LEVEL IN CELL 2

S31 | CONTINUOUS SIGNAL STRENGTH MEASUREMENTS ON CARRIER ($f_2$) ARE PERFORMED ON THE "IDLE CHANNEL" UNTIL CORRECT SAT IS DETECTED

S33 | WHEN CORRECT SAT HAS BEEN DETECTED, CORRESPONDING SIGNAL STRENGTH MEASUREMENTS ARE PERFORMED FOR THE "BUSY" CHANNEL ($f_2$)

S35 | CALCULATE THE NEW POWER LEVEL (PL) THAT WILL OBTAIN BOTH: -SUFFICIENT SS IN CELL 2 -SUFFICIENT C/I IN CELL 2

S37 | REGULATE THE MS TO POWER LEVEL (PL)

S39 | NORMAL POWER REGULATION PROCEDURES TAKE OVER